# EUROPEAN PATENT SPECIFICATION

(11) **EP 4 691 328 B1**
(45) Date of publication and mention of the grant of the patent: **25.11.2026**
(21) Application number: 25174477.7
(22) Date of filing: 06.05.2025
(51) Int. Cl.: A47J 42/44

(54) **COFFEE GRINDER WITH A CORRECTION SYSTEM OF THE DISPENSED COFFEE WEIGHT**
KAFFEEMÜHLE MIT EINEM KORREKTURSYSTEM FÜR DAS AUSGEGEBENE KAFFEE-GEWICHT
MOULIN À CAFÉ AVEC SYSTÈME DE CORRECTION DU POIDS DU CAFÉ DISTRIBUÉ

(30) Priority: 06.08.2024 IT 202400018433
(43) Date of publication of application: 11.02.2026
(73) Proprietor: Conti Valerio - S.r.l., 50019 Sesto Fiorentino (FI) (IT)
(72) Inventor: FIORANI, Maurizio, 20122 MILANO (IT)
(74) Representative: Baldi, Claudio

(56) References cited:
- EP-A1- 4 331 450
- IT-A1- 201900 007 959
- US-A1- 2021 145 215
- US-A1- 2022 000 314

## Description

The present invention relates to a coffee grinder with a correction system of the dispensed coffee weight.

Coffee grinders provided with a support to support a filter holder suitable for being filled with a dose of ground coffee are known on the market. Such coffee grinders are equipped with a load cell connected to the support in order to weigh the ground coffee dispensed into the filter holder and stop the dispensing operation when the coffee weight reaches a preset dose.

EP3023041A1 describes such a type of coffee grinder with a load cell. When the grinder unit of the coffee grinder is stopped, the grinder unit continues to rotate due to inertia and thus a small amount of ground coffee continues to be dispensed from the dispensing duct. For such a reason, the grinder unit must be stopped in advance to prevent the weight of the dispensed coffee from exceeding the desired coffee weight. Such anticipation is known as "time-of-flight".

To comply with the time-of-flight, the load cell can be set to a slightly lower weight than the desired weight of the coffee dose. Otherwise said, a time-of-flight weight equal to the weight of coffee dispensed during the time-of-flight is subtracted from the desired dose weight. Therefore the grinder unit stops when the weight detected by the load cell is equal to the desired weight minus the time-of-flight weight.

However, the time-of-flight is not constant for all types of coffee, and depends on the specific grain size of the ground coffee. The finer the grain size, the higher the time-of-flight to be considered. In addition, the time-of-flight also depends on the mechanical structure of the grinders and on the electronics that operates the grinders. Therefore, the coffee grinders of the prior art are generally impaired by errors and inaccuracies in the dosing system that are mainly due to an incorrect calculation of the time-of-flight and of the relative time-of-flight weight.

WO2020089706A1 describes a system for correcting the time-of-flight weight (called "value Δ" ) that takes into account an average of the weights of multiple weighing operations. However, the average of the weighing operations does not give a reliable correction value. In fact, generally speaking, the dispensing of the coffee powder during the grinding operation is quite regular, but extraordinary situations may occur during the final deceleration step of the grinders in which the coffee powder remains in the grinding chamber and creates a coffee lump. Or there might be a coffee lump in the grinding chamber when the motor of the grinders has already stopped. In such a case, because of the coffee lump, the coffee dose falling during the time-of-flight is inaccurate and creates an error in the amount of the dispensed coffee. Therefore, such an average is not reliable if the weight average includes the weighing of a dispensing operation in which there was a lump.

EP4331450A1 describes a coffee grinder in which the time-of-flight weight (called "tare weight") is increased by excess, so that the weight of the dispensed coffee dose is always lower than the weight of the desired coffee dose. Then, extra coffee doses (refills) are dispensed, so that the weight of the dispensed coffee dose is as close as possible to the weight of the desired coffee dose. In such a case, evidently, no correction of the time-of-flight weight is necessary since the approximation to the desired dose is achieved with refills.

The purpose of the present invention is to eliminate the drawbacks of the prior art by providing a coffee grinder with a correction system of the dispensed coffee weight that is accurate and reliable.

Another purpose is to provide such a grinder that can automatically control the dispensing of a ground coffee dose, regardless of the grain size of the coffee and of the mechanics and electronics of the grinder.

Still another purpose of the present invention is to provide such a coffee grinder that is easy to make and easy to use.

These purposes are achieved in accordance with the invention with the features of the attached independent claims.

Advantageous embodiments of the invention appear from the dependent claims.

The coffee grinder according to the invention is defined by claim 1.

Whereas the prior art provides for using a correction factor given by the average of multiple weighing operations which may include weighing operations that are out of measure in order to correct the time-of-flight weight, the coffee grinder according to the invention does not take into account any dispensing operation that is out of measure, and only intervenes when the error is repeated for two consecutive times.

In such a case the time-of-flight weight is corrected in case of an error confirmation for two consecutive times. In any case, only a small part of the error (¼ E) is corrected if the error is small and the error is totally corrected if the error is large. This is done to minimize the chances of introducing errors on inaccurate weighing operations due to problems that are not caused by an actual variation of the time-of-flight.

Further features of the invention will appear clearer from the following detailed description, which refers to a purely illustrative and therefore non-limiting embodiment illustrated in the appended drawings, wherein:
Fig. 1 is a schematic side view of a coffee grinder according to the invention;
Fig. 2 is a block diagram of the coffee grinder of Fig. 1;
Fig. 3 is a diagram illustrating four threshold weights and the various operations of the coffee grinder in the five ranges defined by the four threshold weights;
Fig. 4 is a flowchart illustrating a first operating step of the coffee grinder of Fig. 1 during a continuous weight detection;
Fig. 5 is a flow diagram illustrating the operation of the coffee grinder of Fig. 1 after one and after multiple dispensing operations of coffee doses;

With the aid of the Figures, the coffee grinder according to the invention is described, which is comprehensively indicated by the reference numeral 100.

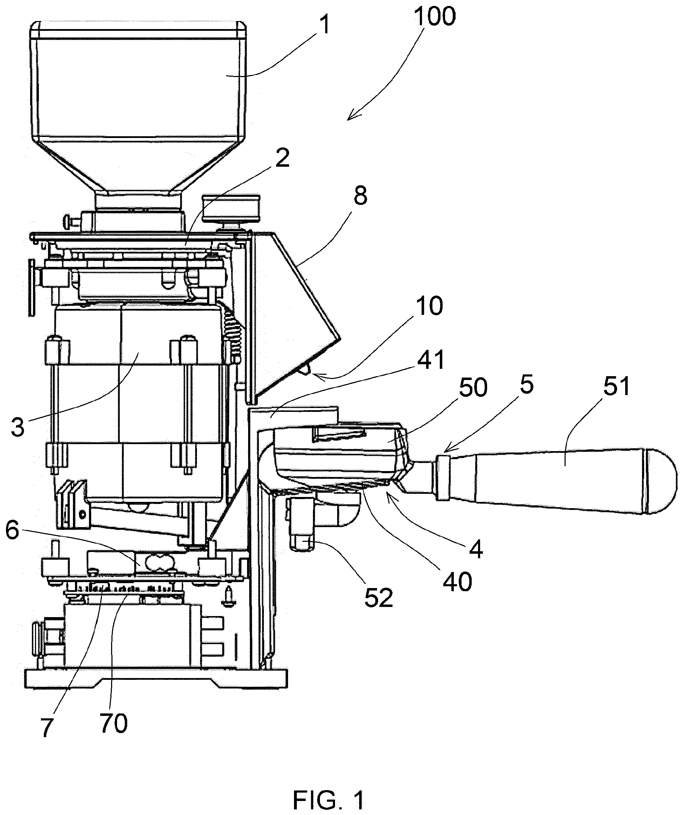

With reference to Fig. 1, the coffee grinder (100) comprises:
- a hopper (1) for loading coffee beans,
- a grinder unit (2) to grind the coffee beans into coffee powder,
- an electric motor (3) to move the grinder unit (2),
- a dispensing unit (10) to dispense powder coffee,
- a support (4) to support a filter holder (5) under the dispensing unit (10),
- a load cell (6) connected to the support (4) to weigh the coffee powder in the filter holder (5),
- a control unit (7) electrically connected to the load cell (6), and
- a user interface (8) connected to the control unit (7).

The filter holder (5) is a typical filter holder for a coffee machine. The filter holder (5) comprises:
- a substantially cylindrical container (50),
- a handle (51) protruding radially from the container, and
- a dispensing nozzle (52) that protrudes inferiorly from the container to dispense liquid coffee.

The support (4) comprises:
- a fork (40) suitable for supporting the container (50) of the filter holder and
- a bracket (41) that connects the fork (40) to the load cell (6).

The load cell (6) is connected to a printed circuit board (PCB) (70) on which the control unit (7) is mounted.

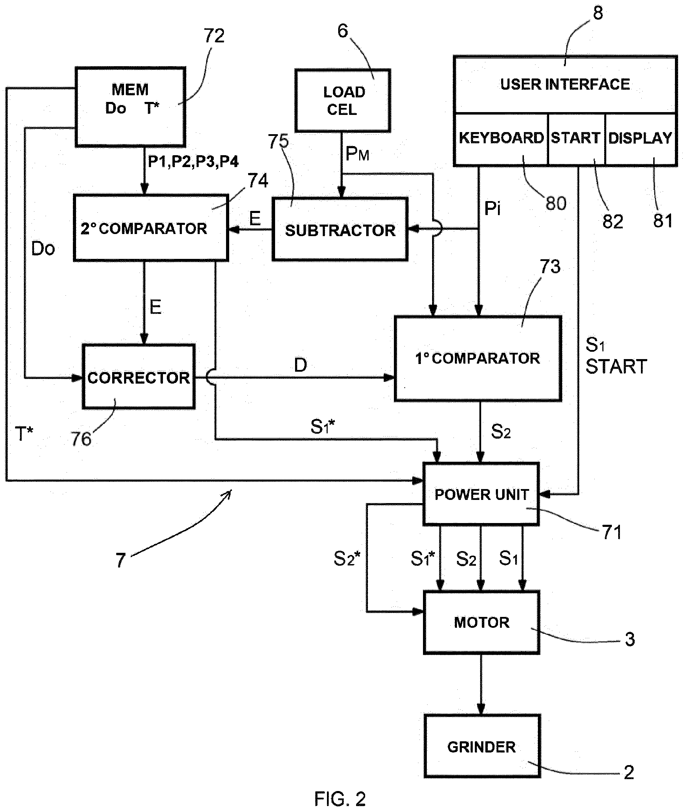

With reference to Fig. 2, the control unit (7) comprises:
- a power unit (71) to drive the electric motor (3),
- a memory (72) in which some operating parameters of the coffee grinder are stored, and
- a first comparator (73) and a second comparator (74) to perform comparisons between parameters and variables.

The user interface (8) comprises:
- a keyboard (80) used by the user to enter a set weight (Pi) of a coffee dose,
- a display (81) to display the set weight entered by the user,
- a start button (82) to send a start signal (S1) to start the grinding cycle.

The load cell (6) continuously detects a measured weight (Pm) of the coffee powder falling into the filter holder. Obviously, the load cell (6) is set to subtract the weight of the filter holder (5) and obtain the net weight of the coffee in the filter holder.

The first comparator (73) receives the set weight (Pi), the measured weight (Pm) and a time-of-flight weight (D). The first comparator (73) is configured to compare the measured weight (Pm) with the set weight (Pi) minus the time-of-flight weight (D). Otherwise said, the first comparator (73) performs the following comparison: $Pm = Pi - D$

When the measured weight (Pm) is equal to the set weight (Pi) minus the time-of-flight weight (D), the first comparator (73) sends a stop signal (S2) to the power unit (71) to stop the motor (3) of the grinder unit.

The control unit (7) is configured to implement a correction algorithm (76) to correct the time-of-flight weight (D). The correction algorithm (76) calculates a correction factor (C) to be added to the time-of-flight weight calculated in the previous weighing operation, as described in detail hereinafter.

The following parameters are stored in the memory (72):
- an initial time-of-flight weight (Do) that is calculated empirically and takes into account the time-of-flight of the grinder unit,
- a first weight threshold (P1), a second weight threshold (P2), a third weight threshold (P3), and a fourth weight threshold (P4) that define error ranges, in which the coffee grinder does not correct the time-of-flight weight, corrects the weight time-flight, or performs a refill, and
- an extra-dose time (T*) that takes into account a time for the grinder unit (2) to let the grinders make an extra travel to dispense an extra dose (refill) of ground coffee.

The time-of-flight is the time in which the grinder unit (2) continues to rotate due to inertia after the motor (3) is turned off.

Therefore, the initial time-of-flight weight (Do) is set by the machine manufacturer based on experimental tests done with coffee grinders in the case of grinding espresso beans. For illustrative purposes, the initial time-of-flight weight (Do) is set to a value of 1-1.2 g, preferably 1.1g
The first weight threshold (P1) has a negative value, for example a value in the range between 0.04 g and 0.06 g, preferably 0.05 g. Such a first weight threshold (P1) takes into account the possibility that a dose with a measured weight (Pm) that is lower than the set weight (Pi) is obtained at the completion of the dispensing operation.

The second weight threshold (P2) has a positive value, for example, a value in the range between 0.1 g and 0.2 g, preferably 0.15 g. Such a second weight threshold (P2) takes into account the possibility that a dose with a measured weight (Pm) that is higher than the set weight (Pi) is obtained at the completion of the dispensing operation.

The third weight threshold (P3) has a negative value that is lower than the first weight threshold (P1). For example, the third weight threshold (P3) has a value in the range between 0.08 g and 0.12 g, preferably 0.1 g. This third weight threshold (P3) takes into account the possibility that a dose with a measured weight (Pm) that is much lower than the set weight (Pi) is obtained at the completion of the dispensing operation, and therefore in this case one or more refills are necessary.

The fourth weight threshold (P4) has a negative value that is much lower than the third weight threshold (P3). For example, the fourth weight threshold (P4) has a value in the range between 1.2 g and 2 g, preferably 1.6 g. The fourth weight threshold (P4) takes into account that there was an obvious error in the weighing operation and therefore the motor of the machine must be restarted.

The extra-dose time (T*) is calculated to let the grinder unit (2) make an extra travel, dispensing a minimum amount of coffee powder (extra-dose). By way of example, the extra-dose time (T*) is calculated for 0.05 -0.15 g of coffee powder to be dispensed.

An error (E) is defined in the operation of the grinder unit as the difference between the measured weight (Pm) and the set weight (Pi) at the completion of the dispensing operation, i.e. after the motor is stopped and some coffee has fallen due to time-of-flight; that is to say: $E = Pm - Pi$

For such a purpose, the control unit (7) comprises a subtractor (75) that receives the set weight (Pi) and the measured weight (Pm) at the completion of the dispensing operation and calculates the error (E).

In the second comparator (74), the error (E) is compared with the four threshold weights (P1, P2, P3. P4) to define three different operating modes of the machine, namely a mode without correction, a mode with correction of the time-of-flight weight (D) and a mode with refills.

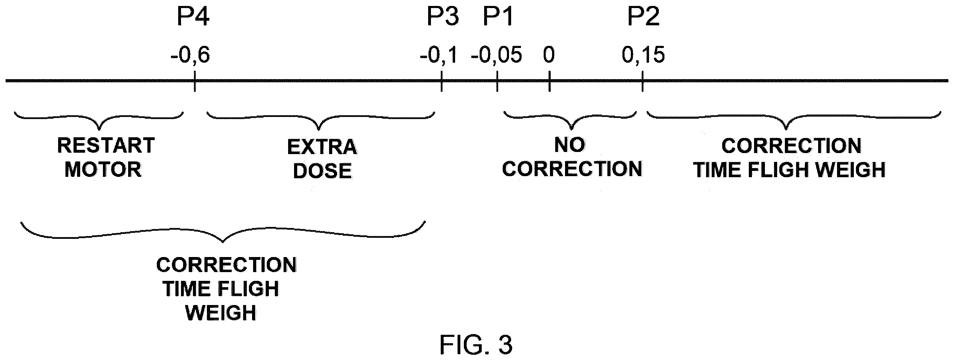

With reference to Fig. 3, no correction is made if the error (E) is comprised in a range between the first threshold weight (P1) and the second threshold weight (P2).

The time-of-flight weight (D) is corrected if the error (E) is higher than the second threshold weight (P2) for two consecutive weighing operations.

The time-of-flight weight (D) is corrected if the error (E) is lower than the first threshold weight (P1) for two consecutive weighing operations.

An extra-dose is dispensed for an extra-dose time (T*), if the error (E) is comprised between the fourth threshold weight (P4) and the third threshold weight (P3).

The motor is restarted if the error (E) is lower than the fourth threshold weight (P4) because there was an obvious weighing error.

Following is an explanation of how the time-of-flight weight (D) is corrected.

The time-of-flight weight (Dₙ) to be applied in an n-th weighing operation is given by the time-of-flight weight (Dₙ₋₁) of the previous weighing operation plus a correction factor (Cₙ₋₁) calculated based on the error (E(ₙ₋₁) of the previous weighing operation, that is to say; ${D}_{n} = {D}_{n - 1} + {C}_{n - 1}$

The control unit of the grinder has a counter that counts the number of consecutive weighing operations in which the error (E) is higher than the second threshold weight (P2) or the error (E) is lower than the first threshold weight (P1).

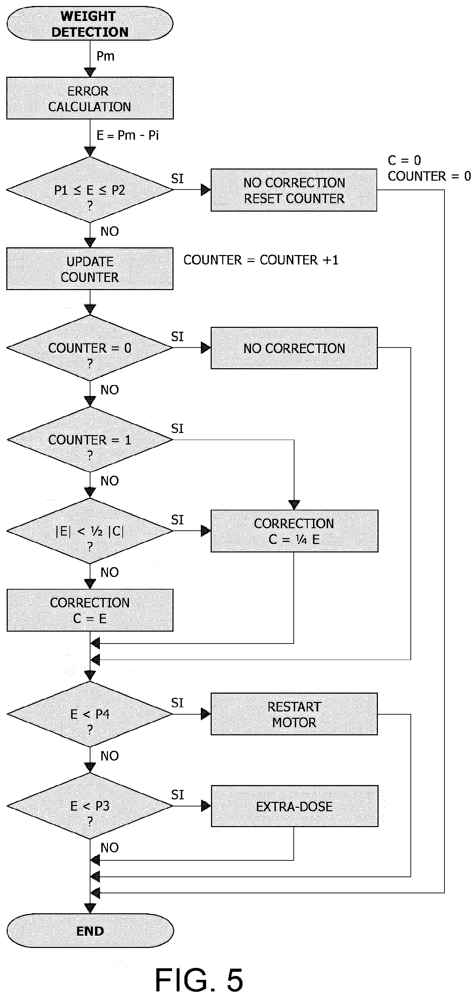

With reference to Fig. 5, if the error (E) is comprised in the range between the first threshold weight (P1) and the second threshold weight (P2), the correction factor (C) is zero, i.e., no correction is made and the counter is reset to zero.

Instead, if the error (E) is higher than the second threshold weight (P2) or the error (E) is lower than the first threshold weight (P1), the counter is updated and increased by 1.

No correction is made if the counter is equal to zero and further comparisons of the error (E) are performed.

If the counter is equal to 1, it means that, for the first time, two consecutive weighing operations had an error (E) that is higher than the second threshold weight (P2) or an error (E) that is lower than the first threshold weight (P1). In such a case, a correction factor (C) proportional to the modulus of the error (E) is calculated. The correction factor (C) is calculated as a fraction of the modulus of the error, specifically one quarter of the error; i.e. $C = \frac{1}{4} \left|E\right|$

In such a case, the time-of-flight weight of the following weighing operation is corrected with the correction factor (C) that was previously calculated.

If the counter is higher than 1, it means that more than two consecutive weighing operations occurred in which the error (E) is higher than the second threshold weight (P2) or the error (E) is lower than the first threshold weight (P1). In such a case, the correction algorithm (76) performs a comparison of the modulus of the error (Eₙ) with the previous correction factor (Cₙ₋₁). If the modulus of the error (Eₙ) is lower than half of the previous correction factor, then the successive correction factor is always 1/4 of the modulus of the error, otherwise the correction factor is increased in the same way as the modulus of the error, that is to say: $\left.If \left|En\right|<\frac{1}{2} {C}_{n - 1}\right) then {C}_{n} = \frac{1}{4} \left|En\right| , otherwise {C}_{\left(n\right) .} = \left|En\right|$

This is done in order to discriminate small weight variations due to environmental changes from large weight variations due to a change in the distance of the grinders.

In any case, the control unit of the coffee grinder performs additional comparisons.

If the error (E) is lower than the fourth threshold weight (P4), it means that there was an obvious error in the dispensing operation, so the motor of the grinder unit is restarted for another dispensing operation.

If the error (E) is comprised between the fourth threshold weight (P4) and the third threshold weight (P3), a refill procedure is initiated in which an extra-dose is dispensed. The motor of the grinder unit is operated for an extra-dose time (T*). The power unit (71) sends an extra-dose start signal (S1*) to the motor (3) of the grinders, and after the extra-dose time (T*), the power unit (71) sends an extra-dose end signal (S2*) to the motor (3) of the grinders.

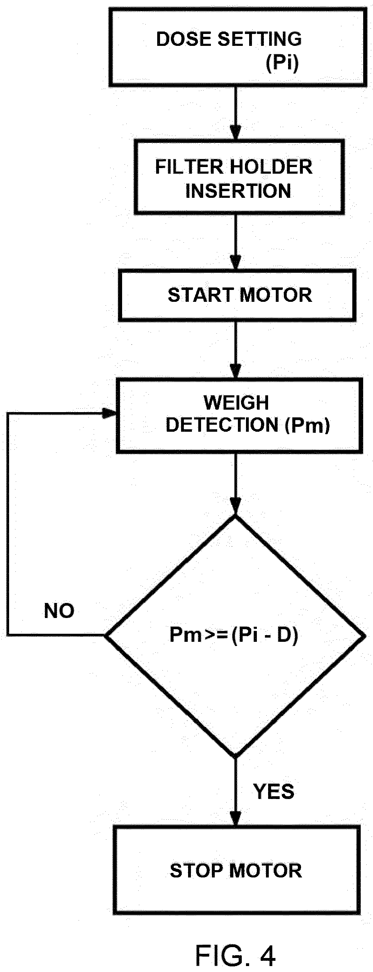

With reference to Figs. 2 and 4, using the keyboard (80) of the user interface, the user enters the set weight (Pi) of the coffee powder dose to be obtained, reading the weight that is set on the display (81).

Then the user inserts the filter holder (5) into the support (4) and presses the start button (82) that emits a start signal (S1) to the power unit (71) that drives the motor (3) that moves the grinder unit (2). The grinder unit grinds the coffee beans into coffee powder that is dispensed from the dispensing unit (10) and falls into the container (50) of the filter holder.

When the coffee powder is dispensed from the dispensing unit (10) and falls into the filter holder (5), the load cell (6) continuously detects the measured weight (Pₘ) of the coffee powder in the filter holder.

The first comparator (73) is configured to compare the measured weight (Pm) detected by the load cell with the set weight (Pi) minus the time-of-flight weight (D).

When the measured weight (Pm) is higher than or equal to the set weight (Pi) minus the time-of-flight weight (D), then the first comparator (73) sends a stop signal (S2) to the power unit (71) that stops the motor (3) of the grinder unit (2). Therefore the grinder unit (2) is stopped in advance, when the weight of the coffee in the filter holder has not reached yet the set weight (Pi). During the time-of-flight, the grinders continue to rotate by inertia and more coffee powder is dispensed, falling into the filter holder (5).

Regarding the first dispensing operation of a dose, the time-of-flight weight (D) is set to the initial time-of-flight weight (Do).

With reference to Fig. 5, after the first dispensing operation, a first weighing operation is performed, in which the first dose is weighed and the first error E₁ is calculated and compared with the threshold weights.

No correction is made and the counter is reset to zero if the first error (E₁) is comprised in the range between the first threshold weight (P1) and the second threshold weight (P2).

The counter is updated and counts a first event if the first error (E₁) is higher than the second threshold weight (P2) or lower than the first threshold weight (P1).

The motor of the grinder unit is restarted if the first error (E₁) is higher than the fourth threshold weight (P4).

If the first error (E₁) is comprised between the fourth threshold weight (P4) and the third threshold weight (P3), an extra dose is dispensed for the extra-dose time (T*).

The second dispensing operation is performed. After the second dispensing operation, a second weighing operation is performed in which the second dose is weighed and the second error E₂ is calculated and compared with the threshold weights.

If the second error (E₂) is comprised in the range between the first threshold weight (P1) and the second threshold weight (P2), no correction is made and the counter is reset to zero.

If the second error (E₂) is higher than the second threshold weight (P2) or lower than the first threshold weight (P1), the counter is updated and counts two consecutive events. Therefore, in such a case a correction factor (C₂) proportional to the modulus of the second error is calculated, which is namely equal to ¼ of the modulus of the second error (E₂).

Such a correction factor (C₂) is used to correct the time-of-flight weight (D) to be applied for the third dispensing operation. Therefore, during the third dispensing operation, the weight time-flight will be: ${D}_{3} = Do + {C}_{2}$

If the second error (E₂) is higher than the fourth threshold weight (P4), the motor of the grinder unit is restarted.

If the second error (E₂) is comprised between the fourth threshold weight (P4) and the third threshold weight (P3), an extra dose is dispensed for the extra-dose time (T*).

The third dispensing operation is performed. After the third dispensing operation, a third weighing operation is performed, in which the third dose is weighed and the third error (E₃) is calculated and compared with the threshold weights.

If the third error (E₃) is comprised in the range between the first threshold weight (P1) and the second threshold weight (P2), no correction is made and the counter is reset to zero.

If the third error (E₃) is higher than the second threshold weight (P2) or lower than the first threshold weight (P1), the counter is updated and counts three consecutive events. Therefore, in such a case a correction factor (C₃) proportional to the third error is calculated.

If the modulus of the third error (E₍₃) is lower than ½ of the previous correction factor (C₂₎, the correction factor (C₃) will be ¼ of the modulus of the third error (E₃). Instead, if the modulus of the third error (E(₃) is higher than ½ of the previous correction factor (C₂), the correction factor (C₃) will be equal to the modulus of the third error (E₃).

The correction factor (C₃) calculated at the completion of the third weighing operation will be used to correct the time-of-flight weight to be applied for the fourth weighing operation.

If the third error (E₃) is higher than the fourth threshold weight (P4), the motor of the grinder unit is restarted.

If the third error (E₃) is comprised between the fourth threshold weight (P4) and the third threshold weight (P3), an extra dose is dispensed for the extra-dose time (T*).

Now, reference is made to a weighing operation after the third weighing operation. If the weights of the two previous weighing operations (i.e., weighing n-2 and weighing n-1) are higher than the second threshold value (P2) or are comprised in the range between the third threshold value (P3) and the first threshold value (P1), a correction factor Cn-1 that is proportional to the previous weighing operation is calculated. If the modulus of the error (En-1) of the last weighing operation is lower than ½ of the correction factor (Cn-2) of the penultimate weighing operation, the correction factor (Cn-1) to be applied in the weighing operation n is ¼ of the modulus of the error (En-1) of the previous weighing operation.

If the modulus of the error (En-1) of the last weighing operation is higher than ½ of the correction factor (Cn-2) of the penultimate weighing operation, the correction factor (Cn-1) to be applied in the weighing operation n is equal to the modulus of the error (En-1) of the previous weighing operation.

## Claims

1. Coffee grinder (100) comprising:
- a hopper (1) for loading coffee beans,
- a grinder unit (2) to grind the coffee beans into coffee powder,
- an electric motor (3) to operate the grinder unit (2),
- a dispensing unit (10) to dispense coffee powder,
- a support (4) to support a filter holder (5) under the dispensing unit (10),
- a load cell (6) connected to the support (4) to weigh the coffee powder inside the filter holder (5), in such a way to have a measured weight (Pₘ) of the coffee in the filter holder,
- a control unit (7) electrically connected to the load cell (6), and
- a user interface (8) connected to the control unit (7),
wherein
said control unit (7) comprises:
- a power unit (71) to drive the electric motor (3),
- a memory (72) wherein operating parameters of the coffee grinder are stored, and
- a first comparator (73) to make comparisons between parameters and variables;
said user interface (8) comprises:
- a keyboard (80) used by the user to enter a set weight (Pᵢ) of a coffee dose,
- a display (81) to display the set weight entered by the user,
- a start button (82) to start the grinding cycle,
the following parameters being stored in said memory (72):
- an initial time-of-flight weight (Do) that takes into account the time-of- flight of the grinder unit,
- a first weight threshold (P1) of negative value, a second weight threshold (P2) of positive value, a third weight threshold (P3) of negative value that is lower than the first weight threshold (P1), and a fourth weight threshold (P4) of negative value that is lower than the third weight threshold (P3); and
- an extra-dose time (T*) that takes into account an operating time of the grinder unit (2) in such a way that the grinders make an extra travel to dispense an extra-dose of ground coffee,
said control unit (7) being configured to correct a time-of-flight weight (D) that is initially set to the initial time-of-flight weight (Do),
said first comparator (73) being configured in such a way that, after pushing the start button (82), the first comparator (73) compares the measured weight (Pₘ) detected by the load cell with the set weight (Pᵢ) set by the user minus the time-of-flight weight (D), and when the measured weight (Pₘ) is equal to the set weight (Pᵢ) minus the time-of-flight weight (D), then the first comparator (73) sends a stop signal (S2) to the power unit (71) to stop the motor (3) of the grinder unit (2);
said control unit (7) comprising:
- a correction algorithm (76) suitable for detecting a correction factor (C) to correct said time-of-flight weight (D),
- a subtractor (75) to subtract the set weight (Pᵢ) from the measured weight (Pₘ) at the end of a dispensing operation so as to obtain an error (E),
- a second comparator (74) that compares said error (E) with said weight thresholds (P1, P2, P3, P4), so that:
if the error (E) is comprised in a range between the first weight threshold (P1) and the second weight threshold (P2), no correction is made to the time-of-flight weight (D) and no refill is performed,
if the error (E) is greater than the second weight threshold (P2) for two consecutive weighing operations, the correction algorithm (76) makes the correction, setting a correction factor (C) proportional to the modulus of the error (E) of the last weighing operation,
if the error (E) is lower than the first weight threshold (P1) for two consecutive weighing operations, the correction algorithm (76) corrects the time-of-flight weight (D) by setting a correction factor (C) proportional to the modulus of the error (E) of the last weighing operation.
if the error is lower than the fourth weight threshold (P4), the motor of the grinder unit is restarted,
if the error (E) is comprised between the fourth weight threshold (P4) and the third weight threshold (P3), a refill is performed by dispensing an extra-dose of ground coffee for said extra-dose time (T*),

2. The coffee grinder (100) according to claim 1, wherein said first weight threshold (P1) has a negative value in the range from - 0.04 g to - 0.06 g;
said second weight threshold (P2) has a positive value in the range from 0.1g to 0.2 g;
said third weight threshold (P3) has a negative value in the range from - 0.08 g to - 0.12 g; and
said fourth weight threshold (P4) has a negative value in the range from - 1.2 g to - 2 g.

3. The coffee grinder (100) according to claim 1 or 2, wherein said initial time-of-flight weight (Do) is comprised in the range from 1 to 1.2 g.

4. The coffee grinder (100) according to any one of the preceding claims, wherein
said correction factor (C) is ¼ of the modulus of the error (E) if the modulus of the error (E) is lower than ½ of the correction factor of the previous weighing operation; said correction factor (C) is equal to the modulus of the error (E) if the modulus of the error (E) is greater than ½ of the correction factor of the previous weighing operation.

5. The coffee grinder (100) according to any one of the preceding claims, wherein said extra-dose time (T*) is calculated in such a way that the grinder unit (2) makes an extra travel, dispensing an amount of coffee powder comprised between 0.05 and 0.15 g.

6. Method for dispensing a dose of coffee ground with a coffee grinder according to any one of the preceding claims, comprising the following steps:
a) setting a set weight (Pᵢ) of a coffee dose,
b) inserting the filter holder (5) into the support (4) of the coffee grinder,
c) starting the motor (3) of the grinder unit,
d) detecting a measured weight (Pₘ) of the coffee powder in the filter holder,
e) comparing the measured weight (Pₘ) with the set weight (Pᵢ) minus the time-of-flight weight (D),
f) stopping the motor (3) of the grinder unit when the measured weight (Pₘ) is equal to the set weight (Pᵢ) minus the time-of-flight weight (D),
g) waiting for a waiting time since the stop of the motor (3),
h) detecting the measured weight (Pₘ) of a coffee powder dose,
i) calculating an error (E) as difference between the measured weight (Pₘ) of a dose and the set weight (Pᵢ),
i) comparing said error (E) with said weight thresholds (P1, P2, P3, P3), so that:
i1) if the error (E) is comprised in a range between the first weight threshold (P1) and the second weight threshold (P2), no correction is made to the time-of-flight weight (D) and no refill is performed
i2) if the error (E) is greater than the second weight threshold (P2) for two consecutive weighing operations, the correction algorithm (76) makes the correction, setting a correction factor (C) proportional to the modulus of the error (E) of the last weighing operation,
i3) if the error (E) is lower than the first weight threshold (P1) for two consecutive weighing operations, the correction algorithm (76) corrects the time-of-flight weight (D), setting a correction factor (C) proportional to the modulus of the error (E) of the last weighing operation,
i4) if the error is lower than the fourth weight threshold (P4), the motor of the grinder unit is restarted, and
i5) if the error (E) is comprised between the fourth weight threshold (P4) and the third weight threshold (P3), a refill is performed, dispensing an extra-dose of ground coffee for said extra-dose time (T*).

7. The method according to claim 6, wherein said first weight threshold (P1) has a negative value in the range from - 0.04 g to - 0.06 g;
said second weight threshold (P2) has a positive value in the range from 0.1g to 0.2 g;
said third weight threshold (P3) has a negative value in the range from - 0.08 g to - 0.12 g; and
said fourth weight threshold (P4) has a negative value in the range from - 1.2 g to - 2 g.

8. The method according to claim 6 or 7, wherein said initial time-of-flight weight (Do) is comprised in the range from 1 to 1.2 g.

9. The method according to any one of claims 6 to 8, wherein
said correction factor (C) is ¼ of the modulus of the error (E) if the modulus of the error (E) is lower than ½ of the correction factor of the previous weighing operation;
said correction factor (C) is equal to the modulus of the error (E) if the modulus of the error (E) is greater than ½ of the correction factor of the previous weighing operation.

10. The method according to any one of claims 6 to 9, wherein said extra-dose time (T*) is calculated in such a way that the grinder unit (2) makes an extra travel to dispense an amount of coffee powder comprised between 0.05 and 0.15 g.

## Patentansprüche

1. Kaffeemühle (100), umfassend:
- einen Trichter (1) zum Einfüllen von Kaffeebohnen,
- ein Mahlwerk (2) zum Mahlen der Kaffeebohnen zu Kaffeemehl,
- einen elektrischen Motor (3) zum Antreiben des Mahlwerks (2),
- eine Ausgabegruppe (10) zum Ausgeben von Kaffeemehl,
- einen Träger (4) zum Tragen eines Filterhalters (5) unterhalb der Ausgabegruppe (10),
- eine Wägezelle (6), die mit dem Träger (4) verbunden ist, um das Kaffeemehl im Filterhalter (5) zu wiegen, um ein gemessenes Gewicht (Pₘ) des Kaffees im Filterhalter zu erhalten,
- eine Steuereinheit (7), die elektrisch mit der Wägezelle (6) verbunden ist, und
- eine Benutzerschnittstelle (8), die mit der Steuereinheit (7) verbunden ist,
wobei
die Steuereinheit (7) Folgendes umfasst:
- eine Antriebseinheit (71), um den elektrischen Motor (3) anzutreiben,
- einen Speicher (72), in dem Betriebsparameter der Kaffeemühle gespeichert sind, und
- einen ersten Komparator (73), um Vergleiche zwischen Parametern und Variablen vorzunehmen;
wobei die Benutzerschnittstelle (8) Folgendes umfasst:
- eine Tastatur (80) zum Eingeben eines eingestellten Gewichts (Pᵢ) einer Kaffeeportion seitens des Benutzers,
- ein Display (81) zum Anzeigen des vom Benutzer eingestellten Gewichts,
- eine Starttaste (82) zum Starten des Mahlzyklus,
wobei die folgenden Parameter in dem Speicher (72) gespeichert sind:
- ein anfängliches Nachlaufgewicht (Do), das den Nachlauf des Mahlwerks berücksichtigt,
- ein erster Gewichtsschwellenwert (P1) mit negativem Wert, ein zweiter Gewichtsschwellenwert (P2) mit positivem Wert, ein dritter Gewichtsschwellenwert (P3) mit kleinerem negativem Wert als der erste Gewichtsschwellenwert (P1) und ein vierter Gewichtsschwellenwert (P4) mit kleinerem negativem Wert als der dritte Gewichtsschwellenwert (P3); und
- eine Extraportionszeit (T*), die eine Betriebszeit des Mahlwerks (2) berücksichtigt, so dass das Mahlwerk einen Zusatzlauf durchführt, um eine Extraportion Kaffeemehl auszugeben,
wobei die Steuereinheit (7) konfiguriert ist, um ein Nachlaufgewicht (D) zu korrigieren, das anfangs beim anfänglichen Nachlaufgewicht (Do) eingestellt wurde,
wobei der erste Komparator (73) so konfiguriert ist, dass nach Betätigen der Starttaste (82) der erste Komparator (73) das von der Wägezelle ermittelte gemessene Gewicht (Pₘ) mit dem vom Benutzer eingestellten Gewicht (Pᵢ) vergleicht, abzüglich des Nachlaufgewichts (D), und wenn das gemessene Gewicht (Pₘ) gleich dem eingestellten Gewicht (Pᵢ) abzüglich des Nachlaufgewichts (D) ist, sendet der Komparator (73) ein Stoppsignal (S2) an die Antriebseinheit (71), die den Motor (3) des Mahlwerks (2) stoppt;
wobei die Steuereinheit (7) Folgendes umfasst:
- einen Korrekturalgorithmus (76), der geeignet ist, einen Korrekturfaktor (C) zum Korrigieren des Nachlaufgewichts (D) zu erfassen,
- einen Subtraktor (75) zum Subtrahieren des eingestellten Gewichts (Pᵢ) vom gemessenen Gewicht (Pₘ) am Ende eines Ausgabevorgangs, um einen Fehler (E) zu erhalten,
- einen zweiten Komparator (74), der den Fehler (E) mit den Gewichtsschwellenwerten (P1, P2, P3, P4) vergleicht, so dass:
wenn der Fehler (E) in einem Bereich zwischen dem ersten Gewichtsschwellenwert (P1) und dem zweiten Gewichtsschwellenwert (P2) liegt, keine Korrektur des Nachlaufgewichts (D) vorgenommen wird und kein Nachfüllen erfolgt,
wenn bei zwei aufeinanderfolgenden Wiegevorgängen der Fehler (E) größer als der zweite Gewichtsschwellenwert (P2) ist, der Korrekturalgorithmus (76) die Korrektur vornimmt, indem ein Korrekturfaktor (C) proportional zum Fehlermodul (E) des letzten Wiegevorgangs eingestellt wird,
wenn bei zwei aufeinanderfolgenden Wiegevorgängen der Fehler (E) kleiner als der erste Gewichtsschwellenwert (P1) ist, der Korrekturalgorithmus (76) die Korrektur des Nachlaufgewichts (D) vornimmt, indem ein Korrekturfaktor (C) proportional zum Fehlermodul (E) des letzten Wiegevorgangs eingestellt wird,
wenn der Fehler kleiner ist als der vierte Gewichtsschwellenwert (P4), der Motor des Mahlwerks erneut gestartet wird,
wenn der Fehler (E) zwischen dem vierten Gewichtsschwellenwert (P4) und dem dritten Gewichtsschwellenwert (P3) liegt, ein Nachfüllen vorgenommen wird, indem eine Extraportion Kaffeemehl für die Extraportionszeit (T*) ausgegeben wird.

2. Kaffeemühle (100) nach Anspruch 1, wobei der erste Gewichtsschwellenwert (P1) einen negativen Wert im Bereich von 0,04 g bis 0,06 g aufweist;
der zweite Gewichtsschwellenwert (P2) einen positiven Wert im Bereich von 0,1 g bis 0,2 g aufweist;
der dritte Gewichtsschwellenwert (P3) einen negativen Wert im Bereich von 0,08 g bis 0,12 g aufweist; und
der vierte Gewichtsschwellenwert (P4) einen negativen Wert im Bereich von 1,2 g bis 2 g aufweist.

3. Kaffeemühle (100) nach Anspruch 1 oder 2, wobei das anfängliche Nachlaufgewicht (Do) im Bereich von 1 g bis 1,2 g liegt.

4. Kaffeemühle (100) nach einem der vorstehenden Ansprüche, wobei der Korrekturfaktor (C) ¼ des Fehlermoduls (E) beträgt, wenn das Fehlermodul (E) kleiner als ½ des Korrekturfaktors des vorhergehenden Wiegevorgangs ist; der Korrekturfaktor (C) gleich dem Fehlermodul (E) ist, wenn das Fehlermodul (E) größer als ½ des Korrekturfaktors des vorhergehenden Wiegevorgangs ist.

5. Kaffeemühle (100) nach einem der vorstehenden Ansprüche, wobei die Extraportionszeit (T*) so berechnet wird, dass das Mahlwerk (2) einen Zusatzlauf ausführt und eine Menge an Kaffeemehl von 0,05 g bis 0,15 g ausgibt.

6. Verfahren zur Ausgabe einer Portion Kaffeemehl mit einer Kaffeemühle nach einem der vorstehenden Ansprüche, umfassend die folgenden Schritte:
a) Einstellen eines eingestellten Gewichts (Pᵢ) einer Kaffeeportion,
b) Einsetzen des Filterhalters (5) in den Träger (4) der Kaffeemühle,
c) Starten des Motors (3) des Mahlwerks,
d) Erfassen des gemessenen Gewichts (Pₘ) des Kaffeemehls im Filterhalter,
e) Vergleichen des gemessenen Gewichts (Pₘ) mit dem eingestellten Gewicht (Pᵢ) abzüglich des Nachlaufgewichts (D),
f) Stoppen des Motors (3) des Mahlwerks, wenn das gemessene Gewicht (Pₘ) gleich dem eingestellten Gewicht (Pᵢ) abzüglich des Nachlaufgewichts (D) ist,
g) Abwarten einer Wartezeit nach dem Stoppen des Motors (3),
h) Erfassen des gemessenen Gewichts (Pₘ) einer Portion Kaffeemehl,
i) Berechnen eines Fehlers (E) als Differenz zwischen dem gemessenen Gewicht (Pₘ) einer Portion und dem eingestellten Gewicht (Pᵢ),
i) Vergleichen des Fehlers (E) mit den Gewichtsschwellenwerten (P1, P2, P3, P3), so dass:
i1) wenn der Fehler (E) in einem Bereich zwischen dem ersten Gewichtsschwellenwert (P1) und dem zweiten Gewichtsschwellenwert (P2) liegt, keine Korrektur des Nachlaufgewichts (D) vorgenommen wird und kein Nachfüllen erfolgt
i2) wenn bei zwei aufeinanderfolgenden Wiegevorgängen der Fehler (E) größer als der zweite Gewichtsschwellenwert (P2) ist, der Korrekturalgorithmus (76) die Korrektur vornimmt, indem ein Korrekturfaktor (C) proportional zum Fehlermodul (E) des letzten Wiegevorgangs eingestellt wird,
i3) wenn bei zwei aufeinanderfolgenden Wiegevorgängen der Fehler (E) kleiner als der erste Gewichtsschwellenwert (P1) ist, der Korrekturalgorithmus (76) die Korrektur des Nachlaufgewichts (D) vornimmt, indem ein Korrekturfaktor (C) proportional zum Fehlermodul (E) des letzten Wiegevorgangs eingestellt wird,
i4) wenn der Fehler kleiner ist als der vierte Gewichtsschwellenwert (P4), der Motor des Mahlwerks erneut gestartet wird, und
i5) wenn der Fehler (E) zwischen dem vierten Gewichtsschwellenwert (P4) und dem dritten Gewichtsschwellenwert (P3) liegt, ein Nachfüllen vorgenommen wird, indem eine Extraportion Kaffeemehl für die Extraportionszeit (T*) ausgegeben wird.

7. Verfahren nach Anspruch 6, wobei der erste Gewichtsschwellenwert (P1) einen negativen Wert im Bereich von 0,04 g bis 0,06 g aufweist;
der zweite Gewichtsschwellenwert (P2) einen positiven Wert im Bereich von 0,1 g bis 0,2 g aufweist;
der dritte Gewichtsschwellenwert (P3) einen negativen Wert im Bereich von 0,08 g bis 0,12 g aufweist; und
der vierte Gewichtsschwellenwert (P4) einen negativen Wert im Bereich von 1,2 g bis 2 g aufweist.

8. Verfahren nach Anspruch 6 oder 7, wobei das anfängliche Nachlaufgewicht (Do) im Bereich von 1 g bis 1,2 g liegt.

9. Verfahren nach einem der Ansprüche 6 bis 8, wobei
der Korrekturfaktor (C) ¼ des Fehlermoduls (E) beträgt, wenn das Fehlermodul (E) kleiner als ½ des Korrekturfaktors des vorhergehenden Wiegevorgangs ist;
der Korrekturfaktor (C) gleich dem Fehlermodul (E) ist, wenn das Fehlermodul (E) größer als ½ des Korrekturfaktors des vorhergehenden Wiegevorgangs ist.

10. Verfahren nach einem der Ansprüche 6 bis 9, wobei die Extraportionszeit (T*) so berechnet wird, dass das Mahlwerk (2) einen Zusatzlauf ausführt und eine Menge Kaffeemehl zwischen 0,05 g und 0,15 g ausgibt.

## Revendications

1. Moulin à café (100) comprenant :
- une trémie (1) dans laquelle charger le café en grains,
- un groupe de moulins (2) pour moudre les grains de café en poudre,
- un moteur électrique (3) pour actionner le groupe de moulins (2),
- un groupe distributeur (10) pour distribuer le café en poudre,
- un support (4) pour soutenir un porte-filtre (5) au-dessous du groupe distributeur (10),
- une cellule de charge (6) reliée au support (4) pour peser le café en poudre dans le porte-filtre (5), afin d'obtenir un poids mesuré (Pm) du café dans le porte-filtre,
- une unité de commande (7) connectée électriquement à la cellule de charge (6), et
- une interface utilisateur (8) connectée à l'unité de commande (7),
où
ladite unité de commande (7) comprend :
- une unité de puissance (71) pour actionner le moteur électrique (3),
- une mémoire (72) dans laquelle sont mémorisés les paramètres de fonctionnement du moulin à café, et
- un premier comparateur (73) pour effectuer des comparaisons entre les paramètres et les variables ;
ladite interface utilisateur (8) comprend :
- un clavier (80) moyennant lequel l'utilisateur peut saisir un poids prédéfini (Pi) d'une dose de café,
- un afficheur (81) pour visualiser le poids prédéfini programmé que l'utilisateur a saisi,
- un bouton de start (82) pour lancer le cycle de moulure,
les paramètres suivants sont sauvegardés dans ladite mémoire72) :
- un premier temps en vol du poids (Do) qui prend en compte du temps en vol du groupe de moulins,
- un premier seuil de poids (P1) de valeur négative, un deuxième seuil de poids (P2) de valeur positive, un troisième seuil de poids (P3) de valeur négative mineure du premier seuil de poids (P1) et un quatrième seuil de poids (P4) de valeur négative mineure du troisième seuil de poids (P3) ; et
- un délai extra-dose (T*) qui prend en compte un temps de fonctionnement du groupe de moulins (2) afin que les moulins puissent effectuer une course supplémentaire pour distribuer une extra-dose de café moulu,
ladite unité de commande (7) étant configurée pour corriger un poids temps en vol (D) qui est programmé, initialement, au poids temps en vol initial (Do),
ledit premier comparateur (73) est configuré de manière que, après l'activation du bouton de start (82), le premier comparateur (73) compare le poids mesuré (Pₘ) relevé par la cellule de charge avec le poids programmé (Pᵢ) saisi par l'utilisateur défalqué du poids temps en vol (D) et quand le poids mesuré (Pₘ) est égal au poids programmé (Pᵢ) défalqué du poids temps en vol (D), alors le premier comparateur (73) envoie un signal de stop (S2) à l'unité de puissance (71) qui arrête le moteur (3) du groupe de moulins (2) ;
ladite unité de commande (7) comprenant :
- un algorithme de correction (76) apte à relever un facteur de correction (C) pour corriger ledit poids temps en vol (D),
- un soustracteur (75) pour soustraire le poids programmé (Pi) du poids relevé (Pm) à la fin d'une opération de distribution, de manière à obtenir une erreur (E),
- un second comparateur (74) qui compare ladite erreur (E) avec lesdits seuils de poids (P1, P2, P3, P4), de façon que :
si l'erreur (E) est comprise dans une plage entre le premier seuil de poids (P1) et le deuxième seuil de poids (P2), aucune correction du poids temps en vol (D) n'est effectuée et de même aucune recharge n'est effectuée,
si lors de deux pesées consécutives l'erreur (E) est majeure du deuxième seuil de poids (P2), l'algorithme de correction (76) effectue la correction en programmant un facteur de correction (C) proportionnel au module de l'erreur (E) de la dernière pesée,
si lors de deux pesées consécutives l'erreur (E) est mineure du premier seuil de poids (P1), l'algorithme de correction (76) effectue la correction du poids temps en vol (D) en programmant un facteur de correction (C) proportionnel au module de l'erreur (E) de la dernière pesée,
si l'erreur est mineure du quatrième seuil de poids (P4), le moteur du groupe de moulins est redémarré,
si l'erreur (E) est comprise entre le quatrième seuil de poids (P4) et le troisième seuil de poids (P3), une recharge est effectuée en distribuant une extra-dose de café moulu pour ledit délai d'extra-dose (T*).

2. Moulin à café (100) selon la revendication 1, où ledit premier seuil de poids (P1) a une valeur négative dans la plage - 0,04 g et - 0,06 g ;
ledit deuxième seuil de poids (P2) a une valeur positive dans la plage 0,1 g et 0,2 g ;
ledit troisième seuil de poids (P3) a une valeur négative dans la plage - 0,08 g et - 0,12 g ; et
ledit quatrième seuil de poids (P4) a une valeur négative dans la plage - 1,2 g et - 2 g.

3. Moulin à café (100) selon la revendication 1 ou 2, où ledit poids temps en vol initial (Do) est compris dans la plage 1-1,2 g.

4. Moulin à café (100) selon l'une quelconque des revendications précédentes, où
ledit facteur de correction (C) correspond à un ¼ du module de l'erreur (E) si le module de l'erreur (E) est mineur de ½ du facteur de correction de la pesée précédente ; ledit facteur de correction (C) est égal au module de l'erreur (E) si le module de l'erreur (E) est majeur de ½ du facteur de correction de la pesée précédente.

5. Moulin à café (100) selon l'une quelconque des revendications précédentes, où ledit délai d'extra-dose (T*) a été calculé afin que le groupe de moulins (2) accomplisse une course supplémentaire en distribuant une quantité de café en poudre comprise entre 0,05 et 0,15 g.

6. Méthode pour la distribution d'une dose de café moulu avec un moulin à café selon l'une quelconque des revendications précédentes comprenant les phases suivantes :
a) programmation d'un poids prédéfini (Pi) d'une dose de café,
b) introduction du porte-filtre (5) dans le support (4) du moulin à café,
c) démarrage du moteur (3) du groupe de moulins,
d) détection d'un poids mesuré (Pm) du café en poudre dans le porte-filtre,
e) comparaison entre le poids mesuré (Pm) et le poids programmé (Pi) défalqué du poids temps en vol (D),
f) arrêt du moteur (3) du groupe de moulins lorsque le poids mesuré (Pm) est égal au poids programmé (Pi) défalqué du poids temps en vol (D),
g) attente d'un délai d'attente à partir de l'arrêt du moteur (3),
h) détection du poids mesuré (Pm) d'une dose de café en poudre,
i) calcul d'une erreur (E) comme différence entre le poids mesuré (Pm) d'une dose et le poids programmé (Pi),
i) comparaison de ladite erreur (E) avec les susdits seuils de poids (P1, P2, P3, P3), de manière que :
i1) si l'erreur (E) est comprise dans une plage entre le premier seuil de poids (P1) et le deuxième seuil de poids (P2), aucune correction du poids temps en vol (D) n'est effectuée et de même aucune recharge n'est effectuée,
i2) si lors de deux pesées consécutives l'erreur (E) est majeure du deuxième seuil de poids (P2), l'algorithme de correction (76) effectue la correction en programmant un facteur de correction (C) proportionnel au module de l'erreur (E) de la dernière pesée,
i3) si lors de deux pesées consécutives l'erreur (E) est mineure du premier seuil de poids (P1), l'algorithme de correction (76) effectue la correction du poids temps en vol (D) en programmant un facteur de correction (C) proportionnel au module de l'erreur (E) de la dernière pesée,
i4) si l'erreur est mineure du quatrième seuil de poids (P4), le moteur du groupe de moulins est redémarré, et
i5) si l'erreur (E) est comprise entre le quatrième seuil de poids (P4) et le troisième seuil de poids (P3), une recharge est effectuée en distribuant une extra-dose de café moulu pour ledit délai d'extra-dose (T*).

7. Méthode selon la revendication 6, où ledit premier seuil de poids (P1) a une valeur négative dans la plage - 0,04 g et - 0,06 g ;
ledit deuxième seuil de poids (P2) a une valeur positive dans la plage 0,1 g et 0,2 g ;
ledit troisième seuil de poids (P3) a une valeur négative dans la plage - 0,08 g et - 0,12 g ; et
ledit quatrième seuil de poids (P4) a une valeur négative dans la plage - 1,2 g et - 2 g.

8. Méthode selon la revendication 6 ou 7, où ledit poids temps en vol initial (Do) est compris dans la plage 1-1,2 g.

9. Méthode selon l'une quelconque des revendications de 6 à 8, où
ledit facteur de correction (C) correspond à un ¼ du module de l'erreur (E) si le module de l'erreur (E) est mineur de ½ du facteur de correction de la pesée précédente ; ledit facteur de correction (C) est égal au module de l'erreur (E) si le module de l'erreur (E) est majeur de ½ du facteur de correction de la pesée précédente.

10. Méthode selon l'une quelconque des revendications de 6 à 9, où ledit délai d'extra-dose (T*) a été calculé afin que le groupe de moulins (2) accomplisse une course supplémentaire en distribuant une quantité de café en poudre comprise entre 0,05 et 0,15 g.
